(19) Europäisches Patentamt / European Patent Office / Office européen des brevets

(11) **EP 4 012 619 A1**

(12) **DEMANDE DE BREVET EUROPEEN**

(43) Date de publication:
**15.06.2022 Bulletin 2022/24**

(21) Numéro de dépôt: **21212732.8**

(22) Date de dépôt: **07.12.2021**

(51) Classification Internationale des Brevets (IPC):
**G06N 3/04** (2006.01)    **G06N 3/08** (2006.01)
**G06N 20/00** (2019.01)

(52) Classification Coopérative des Brevets (CPC):
**G06N 3/0454; G06N 3/084; G06N 3/088;
G06N 20/00**

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**
Etats d'extension désignés:
**BA ME**
Etats de validation désignés:
**KH MA MD TN**

(30) Priorité: **14.12.2020 FR 2013166**

(71) Demandeur: **Commissariat à l'Energie Atomique
et aux Energies
Alternatives
75015 Paris (FR)**

(72) Inventeurs:
• **SEDDIK, Mohamed El Amine
91120 PALAISEAU (FR)**
• **TAHIRI, Younes
59370 MONS-EN-BAROEUL (FR)**
• **TAMAAZOUSTI, Mohamed
91191 GIF-SUR-YVETTE Cedex (FR)**

(74) Mandataire: **Marks & Clerk France
Immeuble "Visium"
22, avenue Aristide Briand
94117 Arcueil Cedex (FR)**

(54) **MÉTHODE DE COMPRESSION D'UN RÉSEAU DE NEURONES ARTIFICIEL**

(57) Méthode, de réduction de la taille d'un réseau enseignant pour obtenir un réseau étudiant, la méthode comprenant les étapes de :
- Entrainer (201) le réseau enseignant à résoudre un premier problème donné pour un premier ensemble de données d'apprentissage,
- Après l'entrainement du réseau enseignant extraire les caractéristiques de sortie de la couche du réseau enseignant,
- Pour au moins une couche intermédiaire du réseau étudiant, initialiser une fonction de projection dans un sous-espace de dimension $k_l$,
- Entrainer (203) le réseau étudiant sur un second ensemble de données d'apprentissage pour résoudre conjointement le premier problème et un second problème de reconstruction des caractéristiques extraites du réseau enseignant projetées dans les sous-espaces de dimensions $k_l$, définis par les fonctions de projection,
- Les paramètres des fonctions de projection étant appris pendant l'entrainement du réseau étudiant conjointement avec les paramètres du réseau étudiant.

FIG.2

**Description**

L'invention concerne le domaine des réseaux de neurones artificiels et plus précisément leur implémentation sur des dispositifs à ressources limitées.

L'invention propose une méthode de réduction de la taille d'un réseau de neurones artificiel de grande taille afin de faciliter son implémentation. Autrement dit, la méthode proposée consiste à compresser un réseau de grande taille pour obtenir un réseau de taille réduite apte à résoudre le même problème avec des performances similaires.

L'invention propose ainsi une méthode de construction d'un réseau de neurones à plus faible dimension avec une performance supérieure ou égale à un réseau de neurones à dimension plus élevée, en termes d'occupation mémoire. Par conséquent, le réseau obtenu est par construction moins gourmand en mémoire et en ressources computationnelles à l'inférence. Un tel réseau une fois construit, peut être implémenté dans des dispositifs électroniques qui sont limités en termes de mémoire et de ressources computationnelles.

Les réseaux de neurones artificiels sont des modèles parmi les plus efficaces pour résoudre des problèmes complexes, notamment des problèmes de classification ou de régression. Les paramètres de ces modèles sont généralement obtenus via des méthodes d'apprentissage machine basées sur des algorithmes de rétro-propagation et de descente de gradient stochastique. Un réseau de neurones est typiquement constitué de plusieurs couches de neurones interconnectées entre elles. Chaque neurone d'une couche est connecté à un ou plusieurs neurones d'une couche suivante et d'une couche précédente par l'intermédiaire de synapses définies par un poids synaptique.

Les performances d'un réseau de neurones sont généralement liées à sa taille, c'est-à-dire au nombre de couches et au nombre de neurones par couches intermédiaires ou couches cachées. Plus ce nombre est important, plus le réseau pourra résoudre des problèmes ayant une complexité de résolution importante.

Cependant, le nombre de paramètres à gérer et d'opérations à réaliser est également directement lié à la taille du réseau. Ainsi, l'implémentation d'un réseau de grande taille sur un dispositif de calcul à ressources limitées est rendu difficile du fait des limites en termes de capacité de calcul, de capacité de stockage et de limite de bande passante.

Il existe ainsi un problème à résoudre pour permettre l'implémentation d'un réseau de neurones de grande taille sur un dispositif de calcul à ressources limitées sans dégrader significativement les performances d'apprentissage du réseau.

Le document [1] présente une méthode de compression d'un modèle de réseau de neurones qui a pour objectif de réduire le volume de données à sauvegarder lors de l'exécution d'un tel réseau.

La méthode proposée est basée sur une sélection des coefficients synaptiques prépondérants, une quantification et un codage de Huffman de ces coefficients. Elle permet de réduire la taille et la quantité des paramètres du réseau à sauvegarder mais n'a pas d'incidence sur la réduction du nombre d'opérations à réaliser qui reste dépendant du nombre de neurones par couche.

D'autres solutions, comme celles décrites dans les documents [2] ou [3], sont basées sur la mise en œuvre d'un réseau dit réseau étudiant, de faible taille, entrainé pour résoudre le même problème qu'un réseau enseignant, de grande taille, à partir de certaines informations acquises après l'entrainement du réseau enseignant.

Un inconvénient de ces méthodes est que les performances du réseau étudiant sont dépendantes du ratio des tailles respectives des réseaux enseignant et étudiant. En effet, plus la différence entre les tailles des deux réseaux est importante, moins les performances du réseau étudiant seront fiables.

La demande de brevet français déposée par le Demandeur sous le numéro de dépôt FR 2005884 décrit une méthode de réduction de dimension d'un réseau de neurones enseignant pour construire un réseau étudiant.

Cette méthode apporte une première solution au problème de la compression de réseaux de grande taille mais les performances de résolution du réseau étudiant peuvent encore être augmentées en améliorant l'optimisation de son apprentissage.

L'invention propose une amélioration à la méthode de compression de réseaux décrite dans la demande française FR 2005884 en incluant, dans l'optimisation, les paramètres de la fonction de projection dans un sous espace de dimension réduite par rapport à l'espace du réseau enseignant. Ces paramètres sont intégrés dans l'apprentissage du réseau de neurones étudiant de manière à apprendre au mieux la fonction de projection et à améliorer les performances de résolution du réseau étudiant pour qu'elles approchent au maximum celles du réseau enseignant.

La méthode proposée repose sur une approche d'optimisation en apprenant des fonctions paramétriques permettant le passage d'un réseau neuronal de grande taille donné (le réseau enseignant) à un réseau neuronal plus petit (réseau étudiant) qui résout la tâche initiale du réseau enseignant ainsi que l'optimisation des fonctions paramétriques de passage entre les deux réseaux.

L'invention a pour objet une méthode, mise en œuvre par ordinateur, de réduction de la taille d'un premier réseau de neurones artificiels dit réseau enseignant pour obtenir un second réseau de neurones artificiels de taille réduite dit réseau étudiant, la méthode comprenant les étapes de :

- Entrainer le réseau enseignant à résoudre un premier problème donné pour un premier ensemble de données d'apprentissage organisées sous la forme de plusieurs vecteurs de données,

- Après l'entrainement du réseau enseignant, pour chaque vecteur de données et pour au moins une couche intermédiaire du réseau enseignant, extraire les caractéristiques de sortie de la couche du réseau enseignant sous forme d'un vecteur ayant une première dimension $p_l$,

- Pour au moins une couche intermédiaire du réseau étudiant, initialiser une fonction de projection dans un sous-espace de dimension $k_l$ strictement inférieure à la première dimension $p_l$,

- Entrainer le réseau étudiant sur un second ensemble de données d'apprentissage pour résoudre conjointement le premier problème et un second problème de reconstruction des caractéristiques extraites du réseau enseignant projetées dans les sous-espaces de dimensions $k_l$ définis par les fonctions de projection,

- Les paramètres des fonctions de projection étant appris pendant l'entrainement du réseau étudiant conjointement avec les paramètres du réseau étudiant.

Selon un aspect particulier de l'invention, le second ensemble de données d'apprentissage est constitué de tout ou partie du premier ensemble de données d'apprentissage ou est constitué de données sémantiquement similaires aux données du premier ensemble de données d'apprentissage.

Selon un aspect particulier de l'invention, les fonctions de projection sont des matrices de projection de dimensions $(p_l, k_l)$.

Selon un aspect particulier de l'invention, les fonctions de projection sont des réseaux de neurones à au moins deux couches et au moins une fonction d'activation non linéaire entre chaque couple de couches successives.

Dans une variante de réalisation, la méthode selon l'invention comprend en outre, après l'entrainement du réseau enseignant, pour chaque vecteur de données et pour au moins une couche intermédiaire du réseau enseignant, une analyse en composantes principales appliquée aux vecteurs de caractéristiques pour déterminer la dimension $k_l$ du sous-espace de projection.

Selon un aspect particulier de l'invention, l'analyse en composantes principales comprend les sous-étapes de :

- Calculer la matrice de covariance $C_l$ des vecteurs de caractéristiques de dimension $p_l$,

- Déterminer les valeurs propres de la matrice de covariance $C_l$,

- Déterminer la dimension $k_l$ du sous-espace de projection comme étant la plus petite valeur entière possible pour laquelle le ratio entre la somme des $k_l$ valeurs propres dominantes et la somme totale des valeurs propres est supérieure ou égale à un seuil prédéterminé.

Selon un aspect particulier de l'invention, les matrices de projection sont initialisées à des matrices contenant les $k_l$ vecteurs propres dominants de la matrice de covariance $C_l$.

Selon un aspect particulier de l'invention, le premier problème est associé à une première fonction objective prédéterminée à minimiser et le second problème est associé à une seconde fonction objective à minimiser définie comme l'erreur quadratique moyenne entre les caractéristiques de sortie des couches intermédiaires du réseau étudiant et les caractéristiques de sortie des couches intermédiaires respectives du réseau enseignant projetées sur le sous-espace de dimension $k_l$ via la fonction de projection.

Selon un aspect particulier de l'invention,, pour résoudre conjointement le premier problème et le second problème, l'entrainement du réseau étudiant est réalisé de sorte à déterminer les paramètres du réseau étudiant et de la fonction de projection qui minimisent la somme de la première fonction objective et de la seconde fonction objective.

Selon un aspect particulier de l'invention, dans lequel les données d'apprentissage sont des données image, audio, vidéo, multimédia ou textuelles.

L'invention a aussi pour objet un dispositif de calcul configuré pour implémenter un réseau de neurones artificiel étudiant obtenu à partir d'un réseau de neurones artificiel enseignant en appliquant la méthode selon l'invention.

L'invention a encore pour objet un programme d'ordinateur comportant des instructions pour l'exécution de la méthode selon l'invention, lorsque le programme est exécuté par un processeur ainsi qu'un support d'enregistrement lisible par un processeur sur lequel est enregistré un programme comportant des instructions pour l'exécution de la méthode selon l'invention, lorsque le programme est exécuté par un processeur.

D'autres caractéristiques et avantages de la présente invention apparaîtront mieux à la lecture de la description qui suit en relation aux dessins annexés suivants.

[Fig. 1] la figure 1 représente un schéma d'un exemple de réseau de neurones artificiel,

[Fig. 2] la figure 2 représente un organigramme détaillant les étapes de mise en œuvre de la méthode selon l'invention,

[Fig. 3] la figure 3 illustre, sur un organigramme, le déroulement de l'étape de réduction de dimension du réseau selon un mode de réalisation de l'invention,

[Fig. 4a] la figure 4a illustre un premier exemple de résultats comparatifs obtenus avec l'invention et deux autres méthodes,

[Fig. 4b] la figure 4b illustre un second exemple de résultats comparatifs obtenus avec l'invention et deux autres méthodes.

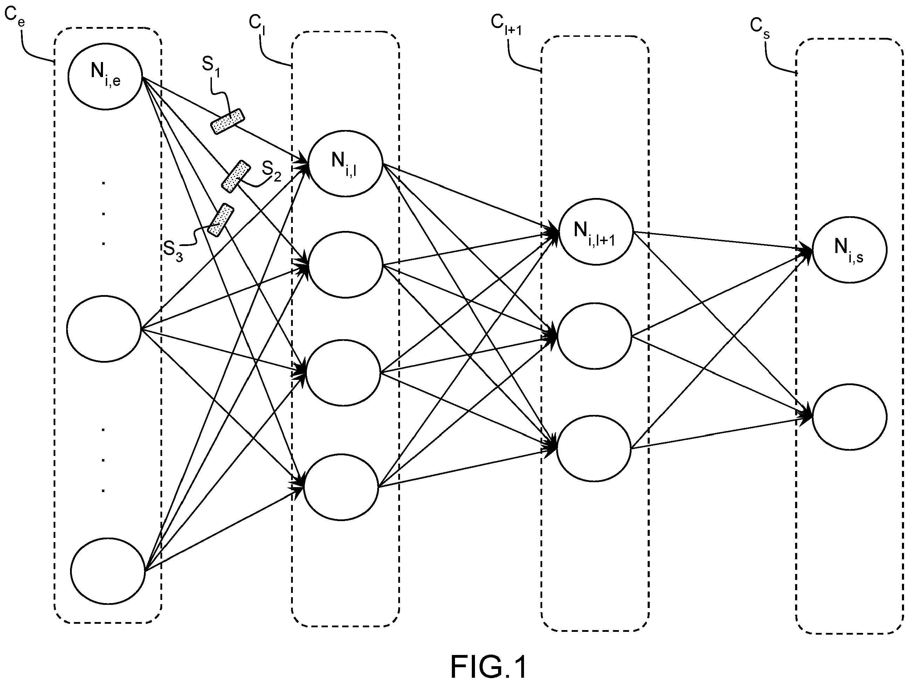

La figure 1 représente un schéma général d'un réseau de neurones artificiels, par exemple un réseau de neurones convolutionnel complètement connecté encore appelé réseau dense. Un réseau de neurones est classiquement composé de plusieurs couches $C_e, C_l, C_{l+1}, C_s$ de neurones interconnectés. Le réseau comporte au moins une couche d'entrée $C_e$ et une couche de sortie $C_s$ et plusieurs couches intermédiaires $C_l, C_{l+1}$ encore appelées couches cachées. Les neurones $N_{i,e}$ de la couche d'entrée $C_e$ reçoivent des données d'entrée. Les données d'entrée peuvent être de natures différentes selon l'application visée. Par exemple, les données d'entrée sont des pixels d'une image. Un réseau de neurones a pour fonction générale d'apprendre à résoudre un problème donné, par exemple un problème de classification, de régression, de reconnaissance, d'identification. Un réseau de neurones est, par exemple, utilisé dans le domaine de la classification d'image ou de la reconnaissance d'image ou plus généralement la reconnaissance de caractéristiques qui peuvent être visuelles, audio, textuelles.

Chaque neurone d'une couche est connecté, par son entrée et/ou sa sortie, à tous les neurones de la couche précédente ou suivante. Plus généralement un neurone peut n'être connecté qu'à une partie des neurones d'une autre couche, notamment dans le cas d'un réseau convolutionnel. Les connexions entre deux neurones $N_{i,e}$, $N_{i,l}$ de deux couches successives se font à travers des synapses artificielles $S_1, S_2, S_3$ qui peuvent être réalisées, notamment, par des mémoires numériques ou par des dispositifs memristifs. Les coefficients des synapses sont optimisés grâce à un mécanisme d'apprentissage du réseau de neurones. Le mécanisme d'apprentissage a pour objectif l'entrainement du réseau de neurones à résoudre un problème défini. Ce mécanisme comporte deux phases distinctes, une première phase de propagation de données de la couche d'entrée vers la couche de sortie et une seconde phase de rétro-propagation d'erreurs de la couche de sortie vers la couche d'entrée avec, pour chaque couche, une mise à jour des poids des synapses. Les erreurs calculées par les neurones de sortie à l'issue de la phase de propagation de données sont liées au problème à résoudre. Il s'agit, de manière générale, de déterminer une erreur entre la valeur d'un neurone de sortie et une valeur attendue ou une valeur cible en fonction du problème à résoudre.

Lors de la première phase de propagation de données, des données d'apprentissage, par exemple des images ou séquences d'images de référence, sont fournies en entrée des neurones de la couche d'entrée et propagées dans le réseau. Chaque neurone met en œuvre, pendant cette première phase, une fonction d'intégration des données reçues qui consiste, dans le cas d'un réseau convolutionnel, à calculer une somme des données reçues pondérées par les coefficients des synapses. Autrement dit, chaque neurone réalise une opération de convolution sur une taille de filtre de convolution correspondant à la taille de la sous-matrice de neurones de la couche précédente auxquels il est connecté. Chaque neurone propage ensuite le résultat de la convolution vers les neurones de la couche suivante. Selon les modèles de neurones choisis, la fonction d'intégration qu'il réalise peut varier.

Les neurones $N_{i,s}$ de la couche de sortie $C_s$ exécutent un traitement supplémentaire en ce qu'ils calculent une erreur entre la valeur de sortie du neurone $N_{i,s}$ et une valeur attendue ou une valeur cible qui correspond à l'état final du neurone de la couche de sortie que l'on souhaite obtenir en relation avec les données d'entrée d'apprentissage et le problème à résoudre par le réseau. Par exemple, si le réseau doit résoudre un problème de classification, l'état final attendu d'un neurone correspond à la classe qu'il est censé identifier dans les données d'entrée.

Plus généralement, à chaque problème particulier à résoudre (classification, régression, prédiction) on associe une ou plusieurs fonction(s) de coût ou fonction objective à optimiser (par minimisation ou maximisation). Un objectif de la phase de rétro-propagation d'erreurs est de rechercher les paramètres du réseau qui optimisent (par exemple minimisent) la fonction objective.

La fonction objective dépend des données propagées entre chaque couche du réseau depuis la couche d'entrée mais aussi d'autres paramètres, par exemple les identifiants des classes auxquelles appartiennent les données dans le cas d'un problème de classification.

Lors de la seconde phase de rétro-propagation d'erreurs, les neurones de la couche de sortie $C_s$ transmettent les erreurs calculées aux neurones de la couche précédente $C_{l+1}$ qui calculent une erreur locale à partir de l'erreur rétro-propagée de la couche précédente et transmettent à leur tour cette erreur locale à la couche précédente $C_l$. En parallèle,

chaque neurone calcule, à partir de l'erreur locale, une valeur de mise à jour des poids des synapses auxquelles il est connecté et met à jour les synapses. Le processus se poursuit pour chaque couche de neurones jusqu'à l'avant dernière couche qui est chargée de mettre à jour les poids des synapses qui la relient à la couche d'entrée $C_e$.

La figure 1 représente un exemple de réseau de neurones donné à titre illustratif et non limitatif. De façon générale, chaque couche intermédiaire d'un réseau peut être connectée totalement ou partiellement à une autre couche.

Les données d'entrée du réseau peuvent être organisées sous la forme de matrices. Le réseau peut être configuré pour générer en sortie un score ou une information de classification ou tout autre type de sortie adaptée selon le problème à résoudre.

Par exemple, si les données d'entrée sont des images ou des caractéristiques extraites d'images ou de séquences d'images, un réseau de neurone peut être configuré pour reconnaitre les objets extraits des images et les classifier selon différentes classes ou catégories prédéfinies. Le problème résolu par le réseau est alors un problème de classification.

Un problème de classification peut aussi être appliqué à des données textuelles, des documents, des pages Internet, des données audio.

Le problème à résoudre par le réseau de neurones peut être de nature très diverse. Il peut s'agir d'un problème de classification d'éléments dans différentes catégories dans l'optique d'apprendre à reconnaitre ces éléments.

Le problème peut aussi consister en l'approximation d'une fonction inconnue ou en une modélisation accélérée d'une fonction connue mais complexe à calculer ou encore un problème de régression ou de prédiction.

Sur la figure 1, on a représenté, à titre purement illustratif, un réseau de neurones comprenant uniquement deux couches intermédiaires et un faible nombre de neurones par couches. Cependant, dans un cas d'application réel, le nombre de couches intermédiaires est souvent plus important et le nombre de neurones par couches atteint plusieurs centaines voire plusieurs milliers de neurones.

De ce fait, le grand nombre de paramètres d'un tel réseau implique une capacité de stockage importante pour stocker les coefficients synaptiques et une capacité de calcul élevée pour exécuter un grand nombre d'opérations.

L'invention vise à proposer une solution permettant de réduire les dimensions d'un réseau de neurones dense pour faciliter son implémentation sur un dispositif de calcul à ressources limitées.

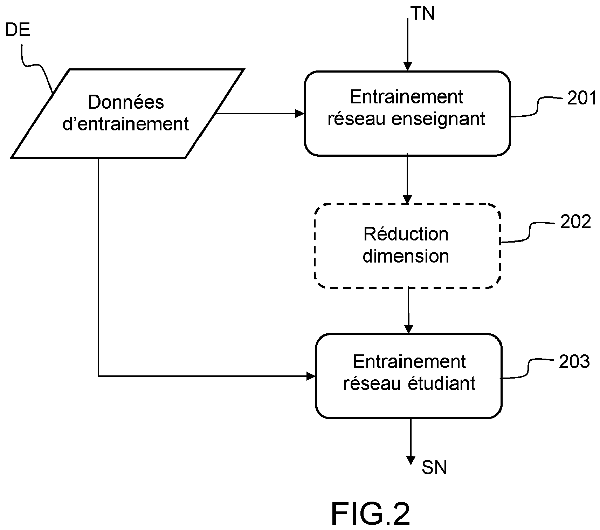

La figure 2 illustre, sur un organigramme, le principe général d'une méthode de compression d'un réseau de neurones enseignant en un réseau de neurones étudiant selon un mode de réalisation de l'invention.

La méthode selon l'invention vise à transformer un réseau de neurones TN de grande dimension en un réseau de neurones de dimension réduite SN. Le réseau de neurones en entrée de la méthode est appelé réseau enseignant TN. Le réseau de neurones obtenu en sortie de la méthode est appelé réseau étudiant SN.

La première étape 201 de la méthode consiste à entrainer le réseau enseignant TN sur un ensemble de données d'entrainement DE ou données d'apprentissage pour résoudre un problème donné associé à une fonction de coût objective à optimiser $L(\theta_{TN})$, avec $\theta_{TN}$ désignant les paramètres du réseau TN à optimiser.

A titre de rappel, on décrit ci-dessous plusieurs exemples de fonction de coût qui peuvent être utilisées pour paramétrer un réseau de neurones lors de l'apprentissage de différents problèmes.

On décrit tout d'abord un exemple qui concerne un problème de classification des données d'entrée dans deux classes distinctes $C_1$ et $C_2$.

Les données d'apprentissage sont notées $x_i$ et sont labellisées via les labels $y_i$. $y_i=0$ si $x_i$ appartient à la première classe $C_1$. $y_i=1$ si $x_i$ appartient à la seconde classe $C_2$.

Un réseau de neurones est construit pour déterminer des prédictions de l'appartenance de nouvelles données à l'une des deux classes. Ces prédictions sont formulées via la relation suivante :

$$\hat{y_i} = \sigma(\beta^T x_i)$$

$\beta$ est un vecteur représentant les paramètres du réseau et $\sigma$ est la fonction sigmoïde.

$$\sigma(t) = \frac{1}{1+e^{-t}}$$

Un exemple de fonction de coût à optimiser pour déterminer les paramètres optimaux du réseau est la fonction suivante :

$$L_{classif}(\beta) = -\frac{1}{n}\sum_{i=1}^{n} y_i \log(\hat{y}_i) + (1 - y_i)\log(1 - \hat{y}_i)$$

Cette fonction de coût est optimisée lors de la phase de rétro-propagation d'erreurs par exemple au moyen d'un algorithme de descente de gradient qui consiste à déterminer les paramètres optimaux par itérations successives.

$\beta_{t+1} = \beta_t - \eta^{\nabla L}{}_{classif}(\beta_t)$, où $\nabla$ désigne l'opérateur du gradient et $\eta$ un paramètre.

Dans le cas d'un problème de classification à plus de deux classes, un exemple de fonction de coût à optimiser est donné par la relation suivante :

$$L_{classif}(\beta) = -\frac{1}{n}\sum_{i=1}^{n}\sum_{l=1}^{k}(y_i)_l \log\left[\left(\sigma(\beta^T x_i)\right)_l\right]$$

$$(\sigma(v))_i = \frac{e^{v_l}}{\sum_{j=1}^{k} v_j}$$

De façon générale, un réseau de neurones peut être modélisé par une fonction f différente de la fonction σ via la relation suivante :

$\hat{y}_i = f(x_i, \theta)$, avec θ représentant les coefficients synaptiques ou poids du réseau.

L'Homme du métier peut se référer à l'ouvrage de référence [4] sur les réseaux de neurones artificiels pour réaliser l'étape 201 de la méthode selon l'invention pour tout type de problème à résoudre et d'architecture de réseau neuronal.

Dans le cas d'un problème de régression qui consiste à prédire à partir d'une donnée $x_i$, une grandeur correspondante $y_i$ continue, un exemple de fonction de coût est l'erreur quadratique moyenne :

$$L_{regress}(\theta) = \frac{1}{n}\sum_{i=1}^{n}\|y_i - \hat{y}_i\|^2$$

De façon générale, le réseau enseignant TN est composé de L couches de neurones et est modélisé à l'aide des relations suivantes :

$$h^{(0)} = x$$

$$h^{(l)} = f_l(W_{TN}{}^{(l)}h^{(l-1)} + b_{TN}{}^{(l)})$$

*x* correspond aux données d'entrées du réseau, autrement dit les données d'entrées de la première couche (l=0) du réseau. Les données x sont des vecteurs de dimension $p_0$ qui est aussi le nombre de neurones de la première couche.

$f_l$ est la fonction d'activation mise en œuvre par les neurones de la couche d'indice l du réseau. $h^{(l)}$ correspond aux caractéristiques produites en sortie des neurones de la couche d'indice l. La dimension du vecteur $h^{(l)}$ qui est aussi le nombre de neurones de la couche d'indice l est noté $p_l$. $W_{TN}{}^{(l)}$ est la matrice des poids de dimension $p_l$ par $p_{l-1}$. $b_{TN}{}^{(l)}$ est un biais associé à la couche d'indice l.

Les dimensions $p_l$ présentent des valeurs élevées, typiquement plusieurs centaines ou milliers de neurones. Un objectif de l'invention est de réduire ces dimensions.

L'entrainement 201 du réseau enseignant TN est typiquement réalisé sur un ensemble de données d'apprentissage représenté par une matrice $X=[x_1,...,x_n]$ de dimension $p_0$ par n. Par exemple il s'agit de n images ou séquences d'images ou séquences audio ou textuelles ou toutes autres données ou mesures selon l'application visée.

La deuxième étape 202 de la méthode selon l'invention consiste à réduire les dimensions $p_l$ en dimensions $k_l$ pour générer un réseau de neurones étudiant SN comprenant autant de couches que le réseau de neurones enseignant TN mais dont les couches intermédiaires (ou couches cachées) ont un nombre de neurones $k_l$ inférieur ou égal à $p_l$. Autrement dit la réduction de dimension est appliquée à au moins une couche cachée du réseau enseignant TN parmi toutes les couches sauf la première couche (l=0) et la dernière couche (l=L-1). Autrement dit, la réduction de dimension peut être appliquée à toutes les couches cachées ou seulement une partie de ces couches.

Dans une première variante, les dimensions $k_l$ sont choisies arbitrairement ou en fonction des contraintes de ressources computationnelles du dispositif sur lequel est implémenté le réseau étudiant.

Dans une seconde variante, les dimensions $k_l$ sont choisies de façon optimisée à partir d'une analyse en composantes principales appliquée aux caractéristiques $h^{(l)}$ extraites des couches du réseau de neurones enseignant lors de son apprentissage 201.

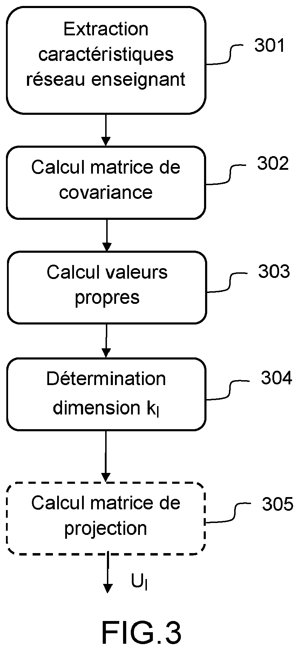

Cette seconde variante est illustrée à la figure 3.

Après l'entrainement du réseau enseignant TN, les caractéristiques de sortie de chaque couche sont extraites 301 et on note ainsi $H_l = [h_1^{(l)}, ..., h_n^{(l)}]$ la matrice des caractéristiques obtenues pour chaque couche l du réseau TN lors de son entrainement. $h_i^{(l)}$ désigne le vecteur des caractéristiques obtenues en sortie de la couche d'indice l du réseau enseignant TN à partir des données d'apprentissage $x_i$.

On applique ensuite une méthode de réduction de dimension à la matrice $H_l$ à partir d'une analyse en composantes principales.

A partir des caractéristiques $H_l$ extraites après l'entrainement du réseau enseignant TN, on calcule 302 la matrice de covariance :

$$C_l = \frac{1}{n}\sum_{i=1}^{n} \bar{h}_i^{(l)}\bar{h}_i^{(l)T} \text{ avec } \bar{h}_i^{(l)} = h_i^{(l)} - \frac{1}{n}\sum_{j=1}^{n} h_j^{(l)}$$

On calcule ensuite 303 les $p_l$ valeurs propres de la matrice de covariance $C_l$.

Ces valeurs propres sont triées dans un ordre décroissant : $\lambda_1^{(l)} \geq ... \geq \lambda_{pl}^{(l)}$.

A l'étape 304, on détermine ensuite la dimension $k_l$ de chaque couche du réseau étudiant en recherchant la valeur minimale de $k_l$ pour laquelle la relation suivante est respectée :

$$\frac{\sum_{i=1}^{kl} \lambda_i^{(l)}}{\sum_{i=1}^{pl} \lambda_i^{(l)}} \geq \varepsilon \quad (1)$$

$\varepsilon$ est un seuil prédéterminé qui définit le pourcentage d'informations du réseau enseignant que l'on souhaite conserver dans le réseau étudiant.

Le critère défini à l'étape 304 consiste à rechercher la valeur de $k_l$ minimale pour laquelle le ratio entre la somme des $k_l$ valeurs propres dominantes et la somme totale des $p_l$ valeurs propres est supérieur ou égal au seuil $\varepsilon$. Des valeurs typiques du seuil sont, par exemple, 0.8, 0.9 ou 0.99.

Dans une variante de réalisation, une étape 305 supplémentaire d'initialisation d'une matrice de projection contenant les $k_l$ vecteurs propres dominants de la matrice $C_l$ est réalisée.

Le réseau de neurones étudiant SN est ensuite défini de la façon suivante :

$$\tilde{h}^{(0)} = x$$

$$\tilde{h}^{(l)} = f_l(\tilde{W}^{(l)}\tilde{h}^{(l-1)} + \tilde{b}^{(l)})$$

Les données x d'entrée du réseau sont de même dimension $p_0$ que pour le réseau enseignant TN.

$f_l$ est la fonction d'activation mise en œuvre par les neurones de la couche d'indice l du réseau. $\tilde{h}^{(l)}$ correspond aux caractéristiques produites en sortie des neurones de la couche d'indice l. La dimension du vecteur $\tilde{h}^{(l)}$ qui est aussi le nombre de neurones de la couche d'indice l est égale à $k_l$. $\tilde{W}^{(l)}$ est la matrice des poids de dimension $k_l$ par $k_{l-1}$. $\tilde{b}^{(l)}$ est un biais associé à la couche d'indice l.

A l'étape 203 de la méthode selon l'invention, le réseau étudiant SN est ensuite entrainé à partir des mêmes données d'apprentissage DE que le réseau enseignant TN. Si l'étape 202 de réduction de dimension n'a été appliquée qu'à une partie des couches du réseau enseignant TN, les couches dont la dimension n'a pas été réduite sont reprises à l'identique dans le réseau étudiant SN.

Dans une autre variante de réalisation, un sous ensemble des données d'apprentissage DE est utilisé pour réaliser l'apprentissage du réseau étudiant SN.

Dans encore une autre variante de réalisation, les données d'apprentissage DE sont remplacées par un nouvel ensemble de données dont le contenu est proche des données d'apprentissage DE, par exemple d'un point de vue sémantique.

Si on note $L_{pb}$ la fonction de coût objective associée au problème à résoudre du réseau enseignant TN, le réseau étudiant SN est optimisé pour résoudre un problème conjoint constitué du problème à résoudre par le réseau TN et d'un second problème de reconstruction des caractéristiques extraites du réseau enseignant TN projetées dans des sous-espaces de dimensions $k_l$ définis par des fonctions de projection $\Psi_{\theta l}()$, paramétrées par un ensemble de paramètres $\theta_l$.

Ainsi, la fonction objective à optimiser lors de l'apprentissage du réseau étudiant SN peut être formulée, par exemple, comme suit :

$$L\big(\widetilde{W}^{(l)}, \tilde{b}^{(l)}, \theta_l, \lambda_{pb}, \lambda_l\big) = e^{-\lambda_{pb}} L_{pb}\left(\widetilde{h_\iota}^{(L)}\right) + \lambda_{pb} +$$

$$\sum_{l=1}^{L-1} e^{-\lambda_l} L_{mse}\left(\widetilde{h_\iota}^{(l)}, \Psi_{\theta l}(h_i^{(l)})\right) + \lambda_l$$

$L_{mse}$ désigne l'erreur quadratique moyenne

$$L_{mse}\left(\widetilde{h_\iota}^{(l)}, \Psi_{\theta l}(h_i^{(l)})\right) = \frac{1}{n}\sum_{i=1}^{n}\left\|\widetilde{h_\iota}^{(l)} - \Psi_{\theta l}(h_i^{(l)})\right\|^2$$

$\tilde{h}_l^{(l)}$ représente le vecteur des caractéristiques associées à la donnée d'entrée $x_i$ et extrait à la couche d'indice l du réseau étudiant SN.

$\tilde{h}_l^{(l)}$ représente le vecteur des caractéristiques associées à la donnée d'entrée $x_i$ et extrait à la couche d'indice l du réseau enseignant TN.

$\widetilde{W}^{(l)}, \tilde{b}^{(l)}$ représentent les paramètres du réseau étudiant SN à optimiser (autrement dit les poids synaptiques $\widetilde{W}^{(l)}$ associés à chaque couche du réseau et un biais $\tilde{b}^{(l)}$ ).

Les paramètres $\lambda_{pb}$ et $\lambda_l$ sont des scalaires optimisés durant le processus d'entrainement.

Les paramètres $\theta_l$ de la fonction de projection $\Psi_{\theta l}()$ sont appris conjointement avec les paramètres du réseau étudiant SN lors de son apprentissage. De cette manière, on améliore la projection des caractéristiques extraites du réseau enseignant vers l'espace de dimension réduite associé au réseau étudiant.

Autrement dit, les paramètres de la fonction de projection $\Psi_{\theta l}()$ évoluent au cours de l'apprentissage du réseau étudiant SN jusqu'à atteindre des valeurs optimisées.

La fonction de coût globale $L(\theta_{SN})$ est optimisée par exemple au moyen d'un algorithme de descente de gradient qui consiste à déterminer les paramètres optimaux par itérations successives.

$\theta_{SN t+1} = \theta_{SN t} - \eta \nabla L(\theta_{SN t})$, où $\nabla$ désigne l'opérateur du gradient et $\eta$ un paramètre.

$\theta_{SN}$ désigne l'ensemble des paramètres à optimiser : $\widetilde{W}^{(l)}, \tilde{b}^{(l)}, \theta_l, \lambda_{pb}, \lambda_l$

En particulier, $\tilde{h}_l^{(l)}$ est une fonction qui dépend des paramètres $\theta_{SN}$. Ainsi, il est possible de calculer le gradient de la fonction $L_{mse}$.

Plusieurs variantes de réalisation sont envisageables pour déterminer la fonction de projection $\Psi_{\theta l}()$ pour au moins une couche l du réseau SN.

Dans une première variante, la fonction de projection $\Psi_{\theta l}()$ est une matrice de projection de dimensions $p_l$ par $k_l$. Cette matrice de projection est initialisée avec des valeurs aléatoires ou est initialisée avec les valeurs de la matrice de projection $U_l$ déterminée à l'étape 305 à partir de l'analyse en composantes principales. Les valeurs initiales de cette matrice de projection évoluent ensuite au cours de l'apprentissage du réseau étudiant SN jusqu'à atteindre des valeurs optimisées.

Dans une seconde variante, la fonction de projection $\Psi_{\theta l}()$ est définie par un réseau de neurones ayant plusieurs couches. Par exemple, il peut s'agir d'un réseau à deux couches séparées par une fonction d'activation non linéaire. Selon cette variante, la fonction de projection $\Psi_{\theta l}()$ est définie comme $\Psi_{\theta l}(x) = V^T \phi(U^T x)$, où U et V désignent respectivement des matrices de poids synaptiques des deux couches du réseau et $\phi$ désigne une fonction d'activation non linéaire, par exemple une fonction ReLU ou tangente hyperbolique.

Cette seconde variante améliore les performances du réseau étudiant en particulier lorsque la relation entre le réseau enseignant et le réseau étudiant est non linéaire.

Plus généralement, la fonction de projection $\Psi_{\theta_l}()$ peut être définie par un réseau de neurones ayant plus de deux couches, chaque couche étant connectée à la suivante via une fonction d'activation non linéaire.

Quelle que soit la variante retenue, les paramètres de la fonction de projection $\Psi_{\theta_l}()$, autrement dit les coefficients de la matrice de projection ou les coefficients synaptiques des couches du réseau de neurones, sont appris au cours de l'apprentissage du réseau étudiant SN et conjointement avec les paramètres de ce réseau étudiant SN.

Dans une variante de réalisation, l'étape 102 de réduction de dimension est appliquée à toutes les couches du réseau enseignant TN mais seule une partie des couches du réseau étudiant SN (typiquement la dernière couche cachée ou les dernières couches cachées) sont mises à jour en apprenant les paramètres $\theta_l$ de la fonction de projection $\Psi_{\theta_l}()$ conjointement avec les paramètres du réseau étudiant SN lors de son apprentissage. Les autres couches du réseau étudiant SN sont mises à jour en remplaçant la fonction de projection $\Psi_{\theta_l}()$ par la matrice de projection $U_l$ qui contient les $k_l$ vecteurs propres dominants de la matrice de covariance $C_l$ déterminée à l'étape 305. Dans encore une autre variante, les autres couches du réseau étudiant SN sont mises à jour au moyen d'un apprentissage classique basé uniquement sur le problème à résoudre du réseau enseignant, sans prendre en compte de fonction de projection.

$L(\tilde{W}^{(l)}, \tilde{b}^{(l)}, \theta_l, \lambda_{pb}, \lambda_l) = e^{-\lambda_{pb}} L_{pb} (\tilde{h}_l^{(L)}) + \lambda_{pb}$ L'expression de la fonction de coût $L_{mse}$ est remplacée par

$$L_{mse}\left(\tilde{h}_l^{(l)}, U_l^T(h_i^{(l)})\right) = \frac{1}{n}\sum_{i=1}^{n}\left\|\tilde{h}_l^{(l)} - U_l^T(h_i^{(l)})\right\|^2$$

La matrice de projection $U_l$ est déterminée à partir des caractéristiques extraites après l'apprentissage du réseau enseignant TN et n'évolue pas lors de l'apprentissage du réseau étudiant SN. Cette variante correspond à la méthode décrite dans la demande de brevet FR 2005884 du Demandeur.

Une fois entrainé, le réseau étudiant SN peut être implémenté sur un dispositif de calcul à ressources limitées pour être exécuté afin de résoudre le problème initialement traité par le réseau enseignant TN.

Un avantage à optimiser les paramètres de la fonction de projection au cours de l'apprentissage du réseau étudiant est ce que cela permet de mieux adapter la projection en fonction du problème à résoudre par le réseau enseignant et le réseau étudiant. De cette manière, les performances du réseau étudiant s'approchent davantage de celles du réseau enseignant.

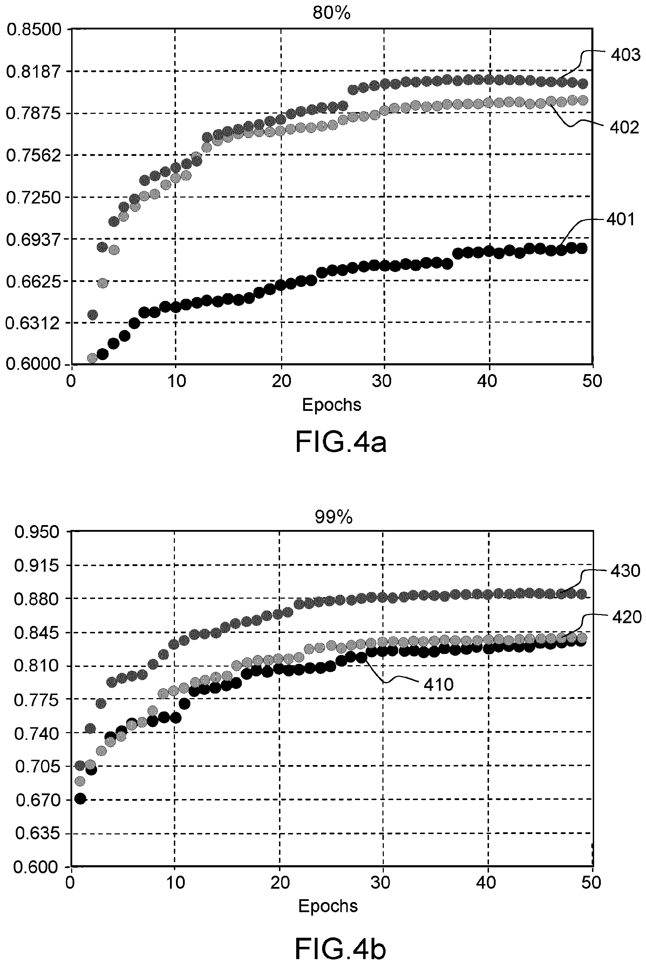

Les figures 4a et 4b illustrent des exemples de résultats obtenus avec la méthode selon l'invention.

Les diagrammes des figures 4a et 4b représentent les performances de classification obtenues pour des données appartenant à une base de données d'images publiques « Fashion MNIST ». L'axe des abscisses correspond à un index d'avancement dans la base de données et l'axe des ordonnées représente un pourcentage de classification correctement réalisée par le réseau de neurones étudiant.

La figure 4a correspond à un réseau de neurones étudiant dont les dimensions sont réduites de sorte à conserver $\varepsilon = 80\%$ de l'information lors de l'étape 304 de réduction de dimensions (voir équation (1) définie précédemment).

Les trois courbes correspondent au même réseau étudiant de dimensions réduites au moyen de l'étape 304 de la figure 3.

La courbe 401 correspond à un réseau de neurones étudiant entrainé au moyen d'une méthode d'entrainement classique, c'est-à-dire en utilisant comme fonction de cout celle du réseau de neurones enseignant associée au seul problème $L_{pb}$.

La courbe 402 correspond à un réseau de neurones étudiant entrainé au moyen de la méthode décrite dans la demande de brevet FR 2005884, c'est-à-dire en exploitant des caractéristiques extraites du réseau enseignant après son entrainement mais sans optimiser la matrice de projection lors de l'entrainement.

Enfin, la courbe 403 correspond à un réseau de neurones étudiant entrainé au moyen de la méthode selon l'invention.

On peut voir que l'invention permet d'obtenir les meilleurs résultats de classification (courbe 403) par rapport aux deux autres méthodes (courbes 401,402).

La figure 4b représente le même type de résultats obtenus cette fois pour une valeur de $\varepsilon = 99\%$. Les courbes 410,420,430 correspondent respectivement aux méthodes d'entrainement utilisées pour les courbes 401,402,403 de la figure 4a.

On remarque que lorsque le taux de réduction de dimensions du réseau est moins important, la méthode de la demande FR 2005884 présente des performances proches (courbe 420) de celle d'une méthode classique (courbe 410) tandis que la présente invention (courbe 430) permet encore d'améliorer les performances de classification.

L'invention peut être mise en œuvre en tant que programme d'ordinateur comportant des instructions pour son exécution. Le programme d'ordinateur peut être enregistré sur un support d'enregistrement lisible par un processeur.

La référence à un programme d'ordinateur qui, lorsqu'il est exécuté, effectue l'une quelconque des fonctions décrites précédemment, ne se limite pas à un programme d'application s'exécutant sur un ordinateur hôte unique. Au contraire, les termes programme d'ordinateur et logiciel sont utilisés ici dans un sens général pour faire référence à tout type de code informatique (par exemple, un logiciel d'application, un micro logiciel, un microcode, ou toute autre forme d'instruction d'ordinateur) qui peut être utilisé pour programmer un ou plusieurs processeurs pour mettre en œuvre des aspects des techniques décrites ici. Les moyens ou ressources informatiques peuvent notamment être distribués ("*Cloud computing*"), éventuellement selon des technologies de pair-à-pair. Le code logiciel peut être exécuté sur n'importe quel processeur approprié (par exemple, un microprocesseur) ou cœur de processeur ou un ensemble de processeurs, qu'ils soient prévus dans un dispositif de calcul unique ou répartis entre plusieurs dispositifs de calcul (par exemple tels qu'éventuellement accessibles dans l'environnement du dispositif). Le code exécutable de chaque programme permettant au dispositif programmable de mettre en œuvre les processus selon l'invention, peut être stocké, par exemple, dans le disque dur ou en mémoire morte. De manière générale, le ou les programmes pourront être chargés dans un des moyens de stockage du dispositif avant d'être exécutés. L'unité centrale peut commander et diriger l'exécution des instructions ou portions de code logiciel du ou des programmes selon l'invention, instructions qui sont stockées dans le disque dur ou dans la mémoire morte ou bien dans les autres éléments de stockage précités.

Le réseau de neurones étudiant SN est implémenté sur un dispositif de calcul basé, par exemple, sur un processeur embarqué. Le processeur peut être un processeur générique, un processeur spécifique, un circuit intégré propre à une application (connu aussi sous le nom anglais d'ASIC pour « Application-Specific Integrated Circuit ») ou un réseau de portes programmables in situ (connu aussi sous le nom anglais de FPGA pour «Field-Programmable Gate Array »). Le dispositif de calcul peut utiliser un ou plusieurs circuits électroniques dédiés ou un circuit à usage général. La technique de l'invention peut se réaliser sur une machine de calcul reprogrammable (un processeur ou un micro-contrôleur par exemple) exécutant un programme comprenant une séquence d'instructions, ou sur une machine de calcul dédiée (par exemple un ensemble de portes logiques comme un FPGA ou un ASIC, ou tout autre module matériel).

L'invention s'applique dans de nombreux domaines dans lesquels il existe un besoin de résoudre un problème complexe, notamment un problème de classification ou de régression.

Par exemple, l'invention s'applique à l'analyse de données images ou vidéos ou plus généralement multimédia pour résoudre un problème de classification, de segmentation ou de détection d'objets dans des données multimédia. Dans ce cas les données d'entrée du réseau sont des données multimédia.

L'invention peut être implémentée dans des dispositifs embarqués, comprenant plusieurs couches de Silicium respectivement dédiées à l'acquisition des données d'entrées (par exemple image, ou vidéo) et aux calculs relatifs au réseau de neurones. Le réseau de neurones étudiant obtenu grâce à l'invention peut être plus facilement embarqué dans un tel dispositif car sa taille est réduite.

L'invention peut aussi s'appliquer à l'analyse de données textuelles.

Références

[1] Song Han et al, « Deep compression : compressing deep neural networks with pruning, trained quantization and Huffman coding », 2015

[2] Seyed-Iman Mirzadeh et al, "Improved knowledge distillation via teacher assistant: bridging the gap between student and teacher", 2019

[3] Junho Yim et al, "A gift from knowledge distillation: fast optimization, network minimization and transfer learning", IEEE conférence on computer vision and pattern récognition, 2017

[4] Paul Rojas, "Neural networks- a systematic introduction", 1996

[5] Alaa Tharwat et al, "Linear discriminant analysis: a detailed tutorial", AI commun, 2017

**Revendications**

1. Méthode, mise en œuvre par ordinateur, de réduction de la taille d'un premier réseau de neurones artificiels dit réseau enseignant (TN) pour obtenir un second réseau de neurones artificiels de taille réduite dit réseau étudiant (SN), la méthode comprenant les étapes de :

   - Entrainer (201) le réseau enseignant à résoudre un premier problème donné pour un premier ensemble de données d'apprentissage organisées sous la forme de plusieurs vecteurs de données,
   - Après l'entrainement du réseau enseignant, pour chaque vecteur de données et pour au moins une couche intermédiaire du réseau enseignant, extraire (301) les caractéristiques de sortie de la couche du réseau enseignant sous forme d'un vecteur ayant une première dimension $p_l$,

- Pour au moins une couche intermédiaire du réseau étudiant, initialiser une fonction de projection dans un sous-espace de dimension $k_l$ strictement inférieure à la première dimension $p_l$,

- Entrainer (203) le réseau étudiant sur un second ensemble de données d'apprentissage pour résoudre conjointement le premier problème et un second problème de reconstruction des caractéristiques extraites du réseau enseignant projetées dans les sous-espaces de dimensions $k_l$ définis par les fonctions de projection,

- Les paramètres des fonctions de projection étant appris pendant l'entrainement du réseau étudiant conjointement avec les paramètres du réseau étudiant.

2. Méthode selon la revendication 1 dans laquelle le second ensemble de données d'apprentissage est constitué de tout ou partie du premier ensemble de données d'apprentissage ou est constitué de données sémantiquement similaires aux données du premier ensemble de données d'apprentissage.

3. Méthode selon la revendication 1 dans laquelle les fonctions de projection sont des matrices de projection de dimensions $(p_l, k_l)$.

4. Méthode selon la revendication 1 dans laquelle les fonctions de projection sont des réseaux de neurones à au moins deux couches et au moins une fonction d'activation non linéaire entre chaque couple de couches successives.

5. Méthode selon l'une quelconque des revendications précédentes comprenant en outre, après l'entrainement du réseau enseignant, pour chaque vecteur de données et pour au moins une couche intermédiaire du réseau enseignant, une analyse en composantes principales appliquée aux vecteurs de caractéristiques pour déterminer la dimension $k_l$ du sous-espace de projection.

6. Méthode selon la revendication 5 dans laquelle l'analyse en composantes principales comprend les sous-étapes de :

- Calculer (302) la matrice de covariance $C_l$ des vecteurs de caractéristiques de dimension $p_l$,
- Déterminer (303) les valeurs propres de la matrice de covariance $C_l$,
- Déterminer (304) la dimension $k_l$ du sous-espace de projection comme étant la plus petite valeur entière possible pour laquelle le ratio entre la somme des $k_l$ valeurs propres dominantes et la somme totale des valeurs propres est supérieure ou égale à un seuil prédéterminé.

7. Méthode selon la revendication 6 en combinaison avec la revendication 2 dans laquelle les matrices de projection sont initialisées à des matrices contenant les $k_l$ vecteurs propres dominants de la matrice de covariance $C_l$.

8. Méthode selon l'une quelconque des revendications précédentes dans laquelle le premier problème est associé à une première fonction objective prédéterminée à minimiser et le second problème est associé à une seconde fonction objective à minimiser définie comme l'erreur quadratique moyenne entre les caractéristiques de sortie des couches intermédiaires du réseau étudiant (SN) et les caractéristiques de sortie des couches intermédiaires respectives du réseau enseignant (TN) projetées sur le sous-espace de dimension $k_l$ via la fonction de projection.

9. Méthode selon la revendication 8 dans laquelle, pour résoudre conjointement le premier problème et le second problème, l'entrainement du réseau étudiant (SN) est réalisé de sorte à déterminer les paramètres du réseau étudiant et de la fonction de projection qui minimisent la somme de la première fonction objective et de la seconde fonction objective.

10. Méthode selon l'une quelconque des revendications précédentes dans lequel les données d'apprentissage sont des données image, audio, vidéo, multimédia ou textuelles.

11. Dispositif de calcul configuré pour implémenter un réseau de neurones artificiel étudiant obtenu à partir d'un réseau de neurones artificiel enseignant en appliquant la méthode selon l'une quelconque des revendications précédentes.

12. Programme d'ordinateur comportant des instructions pour l'exécution de la méthode selon l'une quelconque des revendications 1 à 10, lorsque le programme est exécuté par un processeur.

13. Support d'enregistrement lisible par un processeur sur lequel est enregistré un programme comportant des instructions pour l'exécution de la méthode selon l'une quelconque des revendications 1 à 10, lorsque le programme est exécuté par un processeur.

FIG.1

DE

TN

Données
d'entrainement

Entrainement
réseau enseignant ⌐ 201

Réduction
dimension ⌐ 202

Entrainement
réseau étudiant ⌐ 203

SN

## FIG.2

Extraction
caractéristiques
réseau enseignant — 301

Calcul matrice de
covariance — 302

Calcul valeurs
propres — 303

Détermination
dimension $k_l$ — 304

Calcul matrice de
projection — 305

$U_l$

# FIG.3

FIG.4a

FIG.4b

**RAPPORT DE RECHERCHE EUROPEENNE**

Numéro de la demande

EP 21 21 2732

Europäisches Patentamt
European Patent Office
Office européen des brevets

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | SEDDIK MOHAMED EL AMINE ET AL: "Lightweight Neural Networks From PCA & LDA Based Distilled Dense Neural Networks", 2020 IEEE INTERNATIONAL CONFERENCE ON IMAGE PROCESSING (ICIP), IEEE, 25 octobre 2020 (2020-10-25), pages 3060-3064, XP033868956, DOI: 10.1109/ICIP40778.2020.9190888 * le document en entier * ----- | 1-13 | INV. G06N3/04 G06N3/08 G06N20/00 |
| X | FURKAN YESILER ET AL: "Less is more: Faster and better music version identification with embedding distillation", ARXIV.ORG, CORNELL UNIVERSITY LIBRARY, 201 OLIN LIBRARY CORNELL UNIVERSITY ITHACA, NY 14853, 7 octobre 2020 (2020-10-07), XP081780596, * abrégé * * Sections 3 & 4 * ----- | 1-13 | |
| X | SUBHABRATA MUKHERJEE ET AL: "TinyMBERT: Multi-Stage Distillation Framework for Massive Multi-lingual NER", ARXIV.ORG, CORNELL UNIVERSITY LIBRARY, 201 OLIN LIBRARY CORNELL UNIVERSITY ITHACA, NY 14853, 12 avril 2020 (2020-04-12), XP081643026, * abrégé * * Sections 3-5 * ----- -/-- | 1-13 | DOMAINES TECHNIQUES RECHERCHES (IPC) G06N |

Le présent rapport a été établi pour toutes les revendications

| Lieu de la recherche | Date d'achèvement de la recherche | Examinateur |
|---|---|---|
| La Haye | 3 mai 2022 | Suarez Y Gonzalez, R |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
........................................................
& : membre de la même famille, document correspondant

EPO FORM 1503 03.82 (P04C02)

page 1 de 2

Europäisches
Patentamt

European
Patent Office

Office européen
des brevets

**RAPPORT DE RECHERCHE EUROPEENNE**

Numéro de la demande

EP 21 21 2732

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | SUNGWON HAN ET AL: "Lightweight and Robust Representation of Economic Scales from Satellite Imagery", ARXIV.ORG, CORNELL UNIVERSITY LIBRARY, 201 OLIN LIBRARY CORNELL UNIVERSITY ITHACA, NY 14853, 18 décembre 2019 (2019-12-18), XP081562102, * abrégé * * page 3 – page 4 * ----- | 1-13 | |

DOMAINES TECHNIQUES
RECHERCHES (IPC)

Le présent rapport a été établi pour toutes les revendications

| Lieu de la recherche | Date d'achèvement de la recherche | Examinateur |
|---|---|---|
| La Haye | 3 mai 2022 | Suarez Y Gonzalez, R |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
........................................................................
& : membre de la même famille, document correspondant

EPO FORM 1503 03.82 (P04C02)

page 2 de 2

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2005884

**Littérature non-brevet citée dans la description**

- **SONG HAN et al.** *Deep compression : compressing deep neural networks with pruning, trained quantization and Huffman coding,* 2015
- **SEYED-IMAN MIRZADEH et al.** *Improved knowledge distillation via teacher assistant: bridging the gap between student and teacher,* 2019
- **JUNHO YIM et al.** A gift from knowledge distillation: fast optimization, network minimization and transfer learning. *IEEE conférence on computer vision and pattern récognition,* 2017
- **PAUL ROJAS.** *Neural networks- a systematic introduction,* 1996
- **ALAA THARWAT et al.** Linear discriminant analysis: a detailed tutorial. *AI commun,* 2017